# FASCICULE DE BREVET EUROPEEN

(11) **EP 3 555 152 B1**
(45) Date de publication et mention de la délivrance du brevet: **24.02.2021**
(21) Numéro de dépôt: 17822421.8
(22) Date de dépôt: 14.12.2017
(51) Int. Cl.: C08F 220/06, C08F 120/06, C09C 3/10, D21H 19/56

(54) **MÉTHODE DE BROYAGE DE MATIÈRE MINÉRALE**
VERFAHREN ZUM SCHLEIFEN VON MINERALMATERIAL
METHOD FOR GRINDING MINERAL MATERIAL

(30) Priorité: 16.12.2016 FR 1662582
(43) Date de publication de la demande: 23.10.2019
(73) Titulaire: Coatex, 69730 Genay (FR)
(72) Inventeur: CHAMPAGNE, Clémentine, 69300 Caluire-et-Cuire (FR); JACQUEMET, Christian, 69005 Lyon (FR); MAGNY, Benoît, 69270 Cailloux sur Fontaines (FR); MONGOIN, Jacques, 69650 Quincieux (FR); SUAU, Jean-Marc, 69480 Lucenay (FR)
(74) Mandataire: Balmefrezol, Ludovic Francis Pierre
(86) Numéro de dépôt international: PCT/FR2017/053571
(87) Numéro de publication internationale: WO 2018/109400

(56) Documents cités:
- EP-A1- 2 900 708
- EP-A1- 3 074 436

## Description

La présente invention concerne une méthode de préparation de particules minérales par broyage d'une matière minérale en présence d'un polymère anionique particulier. Le polymère mis en œuvre est obtenu par polymérisation en présence d'hypophosphite de sodium, de dipropionate trithiocarbonate disodique (DPTTC) et d'au moins un composé générateur de radicaux. L'invention concerne également une composition aqueuse comprenant des particules de matière minérale broyée et un tel polymère, en particulier une composition de sauce de couchage papetière.

Les documents EP 2900708 et EP 3074436 décrivent des méthodes de préparation de polymères anioniques dont la masse moléculaire et l'indice de polymolécularité sont contrôlés.

On connaît des méthodes de broyage de matière minérale, notamment pour le broyage de matières minérales utilisées dans l'industrie papetière. En particulier, on connaît des méthodes de broyage de matière minérale qui mettent en œuvre des agents d'aide au broyage, notamment des polymères issus de monomères insaturés comprenant une ou plusieurs fonctions acides carboxyliques. Ces agents d'aide au broyage permettent de contrôler la rhéologie de la suspension lors de l'opération de broyage. Généralement, ces agents d'aide au broyage permettent de réduire autant que possible la limite d'écoulement de la suspension de charge minérale à broyer tout en maintenant un niveau de viscosité suffisante durant l'opération de broyage.

De manière générale, les méthodes de broyage de matière minérale doivent être efficaces et permettre de contrôler la granulométrie des particules obtenues.

De plus, les méthodes de broyage de matière minérale doivent avoir une efficacité élevée en termes de durée de broyage pour une granulométrie particulière et pour une quantité définie de matière minérale. En effet, pour la préparation d'une quantité définie de particules minérales de granulométrie particulière, un temps d'utilisation réduit des installations de broyage permet une amélioration du rendement global de la méthode de broyage.

De même, il est important de disposer de méthodes de broyage de matière minérale qui permettent de préparer des suspensions aqueuses de particules de matière minérale de faible viscosité qui soient stables peu après le broyage mais également plusieurs heures ou plusieurs jours après le broyage. Les phénomènes de dérive de la viscosité doivent être contrôlés car ils peuvent conduire à une gélification des suspensions préparées qui en rendrait la manipulation difficile voire impossible. De tels écarts de viscosité doivent être les plus faibles possibles. De même, les phénomènes de sédimentation des particules doivent être évités ou fortement ralentis.

Outre le contrôle de la stabilité, le contrôle de la viscosité des suspensions aqueuses de particules de matière minérale broyée est également essentiel. De manière générale, le contrôle de la viscosité des suspensions aqueuses de particules de matière minérale broyée doit permettre d'atteindre une viscosité faible.

Il est également important de pouvoir préparer des suspensions aqueuses de particules de matière minérale possédant un extrait sec élevé. Un extrait sec élevé de ces suspensions aqueuses de particules de matière minérale permet notamment d'augmenter la productivité des procédés de préparation de ces suspensions.

De plus, d'un point de vue environnemental, il est important de pouvoir disposer d'agents d'aide au broyage permettant de préparer des suspensions de particules de matière minérale comprenant une quantité d'eau réduite tout en maintenant ou en améliorant les propriétés de ces suspensions.

Par ailleurs, lors de la fabrication des papiers couchés et surfacés, des compositions aqueuses de sauces de couchage papetières sont utilisées pour déposer une couche de particules de matière minérale et de liant à la surface de la feuille de papier afin de modifier son état de surface pour améliorer son imprimabilité, sa brillance ou encore son opacité.

Par exemple, pour un papier couché destiné à l'impression, la couche est obtenue à partir d'une dispersion aqueuse constituée majoritairement de liants et de pigments encore appelés charges minérales. Les pigments les plus utilisés pour le couchage du papier sont le kaolin, le carbonate de calcium, le dioxyde de titane, le talc et les pigments organiques, notamment les pigments plastiques. Au sein de ces compositions, la charge minérale est sous la forme de particules. L'utilisation de telles sauces de couchage papetières permet notamment d'améliorer les propriétés physiques du papier, en particulier d'améliorer ses propriétés optiques.

L'amélioration de l'efficacité des procédés de fabrication de papier est également permise grâce à l'utilisation de ces sauces de couchage papetières.

Améliorer la compatibilité des différents composés utilisés lors de la préparation du papier doit également être recherché.

Ainsi, bien qu'il existe des procédés de broyage humide de matière minérale qui mettent en œuvre des polymères comme agent d'aide au broyage, les procédés de l'état de la technique ne permettent pas toujours d'apporter de solution satisfaisante aux problèmes rencontrés. Il existe donc un besoin de disposer de procédés améliorés de broyage de matière minérale dans l'eau.

La méthode selon l'invention permet d'apporter une solution à tout ou partie des problèmes des méthodes de l'état de la technique.

Ainsi, l'invention fournit une méthode de préparation de particules de matière minérale comprenant le broyage, en présence d'eau, d'au moins une matière minérale en présence d'au moins un polymère de masse moléculaire en poids Mw (mesurée par CES) inférieure à 8 000 g/mol et d'indice de polymolécularité IP ou indice de polydispersité inférieur à 3, obtenu par une réaction de polymérisation radicalaire dans l'eau, à une température supérieure à 50°C, d'au moins un monomère anionique comprenant au moins une insaturation oléfinique polymérisable et une fonction acide carboxylique, en présence :
- d'hypophosphite de sodium,
- de dipropionate trithiocarbonate disodique (DPTTC) et
- d'au moins un composé générateur de radicaux choisi parmi peroxyde d'hydrogène, persulfate d'ammonium, un persulfate de métal alcalin, du peroxyde d'hydrogène associé à un ion choisi parmi Fe^{II}, Fe^{III}, Cu^{I}, Cu^{II} et leurs mélanges.

Lors de la méthode de broyage selon l'invention, la matière minérale mise en œuvre peut se présenter sous différentes formes, notamment sous la forme de grains de taille grossière issus de blocs ou de morceaux de matière minérale concassée. Lors du broyage selon l'invention, la taille des grains, notamment des grains de taille grossière, de matière minérale ou des morceaux de matière minérale mis en œuvre est réduite jusqu'à obtenir des particules. La méthode selon l'invention est particulièrement efficace pour contrôler la taille des particules préparées lors du broyage de la matière minérale. Selon l'invention, la taille des particules est mesurée par sédimentation.

Pour la méthode selon l'invention, la taille des particules peut être définie par leur diamètre médian d₅₀ pour lequel la moitié en poids d'une population de particules a une taille inférieure à une valeur donnée. Ainsi, les particules ayant une taille inférieure à 50 µm sont des particules appartenant à une population dont la moitié en poids a un diamètre inférieur à 50 µm. De manière préférée, la méthode selon l'invention concerne la préparation de particules dont la taille est inférieure à 50 µm ou bien dont la taille va de 0,05 µm à 50 µm.

De manière plus préférée, la méthode selon l'invention concerne la préparation de particules de matière minérale dont la taille est inférieure à 10 µm ou encore inférieure à 5 µm ou à 2 µm. Plus préférentiellement, la taille des particules de matière minérale est inférieure à 1 µm ou inférieure à 0,5 µm. De manière également préférée pour la méthode selon l'invention, au moins 50 % en poids des particules ont une taille allant de 0,5 µm à 50 µm ou bien une taille inférieure à 10 µm. En particulier, au moins 50 % en poids des particules ont une taille inférieure à 5 µm ou à 2 µm, voire inférieure à 1 µm.

De manière avantageuse pour la méthode selon l'invention, au moins 60 % en poids des particules ont une taille allant de 0,5 µm à 50 µm ou bien une taille inférieure à 10 µm. En particulier, au moins 60 % en poids des particules ont une taille inférieure à 5 µm ou à 2 µm, voire inférieure à 1 µm. De manière également avantageuse pour la méthode selon l'invention, au moins 75 % en poids des particules ont une taille allant de 0,5 µm à 50 µm ou bien une taille inférieure à 10 µm. En particulier, au moins 75 % en poids des particules ont une taille inférieure à 5 µm ou à 2 µm, voire inférieure à 1 µm.

De manière également avantageuse pour la méthode selon l'invention, au moins 90 % en poids des particules ont une taille allant de 0,5 µm à 50 µm ou bien une taille inférieure à 10 µm. En particulier, au moins 90 % en poids des particules ont une taille inférieure à 5 µm ou à 2 µm, voire inférieure à 1 µm.

Pour la méthode selon l'invention, une population de particules minérales peut également être définie par un diamètre équivalent sphérique (esd). De manière préférée selon l'invention, le diamètre équivalent sphérique des particules ayant une taille inférieure à 50 µm est égal à 50 % en poids. Dans ce cas, 50 % en poids des particules ont une taille inférieure à 50 µm. De manière également préférée selon l'invention, le diamètre équivalent sphérique des particules de taille allant de 0,05 µm à 50 µm ou inférieure à 50 µm, est égal à 60 % en poids ou égal à 70 % en poids ou encore égal à 80 % en poids ou encore égal à 90 % en poids.

De manière plus préférée selon l'invention, le diamètre équivalent sphérique des particules pour une taille inférieure à 10 µm est égal à 60 % en poids ou égal à 70 % en poids ou encore égal à 80 % en poids ou encore égal à 90 % en poids.

De manière bien plus préférée selon l'invention, le diamètre équivalent sphérique des particules pour une taille inférieure à 5 µm est égal à 60 % en poids ou égal à 70 % en poids ou encore égal à 80 % en poids ou encore égal à 90 % en poids.

De manière encore plus préférée selon l'invention, le diamètre équivalent sphérique des particules pour une taille inférieure à 2 µm est égal à 60 % en poids ou égal à 70 % en poids ou encore égal à 80 % en poids ou encore égal à 90 % en poids.

De manière tout particulièrement préférée selon l'invention, le diamètre équivalent sphérique des particules pour une taille inférieure à 1 µm est égal à 60 % en poids ou égal à 70 % en poids ou égal à 80% en poids ou encore égal à 90 % en poids.

De manière également préférée selon l'invention, le diamètre équivalent sphérique des particules pour une taille inférieure à 0,5 µm est égal à 60 % en poids ou égal à 70 % en poids ou égal à 80% en poids ou encore égal à 90 % en poids.

De manière préférée, la méthode selon l'invention met en œuvre au moins une matière minérale synthétique ou d'origine naturelle.

De manière également préférée, la méthode selon l'invention met en œuvre au moins une matière minérale choisie parmi les carbonates de métal alcalino-terreux, de préférence carbonate de calcium (carbonate de calcium naturel ou carbonate de calcium précipité), carbonate de strontium, carbonate de magnésium, carbonate de baryum, dolomie, kaolin, dioxyde de titane, talc, chaux, sulfate de calcium, sulfate de baryum. De manière plus préférée, la méthode selon l'invention met en œuvre au moins une matière minérale choisie parmi carbonate de calcium naturel, carbonate de calcium précipité, dolomie, kaolin, kaolin calciné, dioxyde de titane, talc, chaux.

La méthode selon l'invention peut mettre en œuvre une unique matière minérale ou bien plusieurs matières minérales. Ainsi, la méthode selon l'invention peut mettre en œuvre deux ou trois matières minérales. En particulier, la méthode selon l'invention peut mettre en œuvre du carbonate de calcium et au moins une autre matière minérale choisie parmi dolomie, kaolin, kaolin calciné, dioxyde de titane, talc, chaux, notamment du carbonate de calcium et du kaolin ou du carbonate de calcium et de la chaux. De même, la méthode selon l'invention peut mettre en œuvre du dioxyde de titane et au moins une autre matière minérale choisie parmi carbonate de calcium, dolomie, kaolin, talc, chaux, notamment du dioxyde de titane et du kaolin ou du dioxyde de titane et de la chaux. Également, la méthode selon l'invention peut mettre en œuvre du kaolin ou du kaolin calciné et au moins une autre matière minérale choisie parmi dolomie, talc, chaux. La méthode selon l'invention peut également mettre en œuvre du talc et de la chaux ou du talc et de la dolomie.

Outre une matière minérale, la méthode selon l'invention met en œuvre au moins un polymère particulier issu d'une réaction de polymérisation radicalaire, en présence d'hypophosphite de sodium, de dipropionate trithiocarbonate disodique (DPTTC) et d'au moins un composé générateur de radicaux choisi parmi peroxyde d'hydrogène, persulfate d'ammonium, un persulfate de métal alcalin, du peroxyde d'hydrogène associé à un ion choisi parmi Fe^{II}, Fe^{III}, Cu^{I}, Cu^{II} et leurs mélanges.

De manière préférée, la réaction de polymérisation est réalisée dans l'eau ou dans un solvant en mélange avec de l'eau, notamment un solvant alcoolique, en particulier alcool isopropylique. De manière particulièrement préférée, la réaction de polymérisation est réalisée dans l'eau uniquement.

Selon l'invention l'hypophosphite de sodium (n° CAS 7681-53-0 ou 10039-56-2 pour la forme monohydratée) est un sel de sodium de l'acide hypophosphoreux.

Selon l'invention, le DPTTC est le disodium 2,2'-(thiocarbonylbisthio)-dipropanoate (n° CAS 864970-33-2). Ses sels de sodium sont mis en œuvre selon l'invention.

De manière également préférée, la réaction de polymérisation met en œuvre un composé générateur de radicaux choisi parmi peroxyde d'hydrogène, persulfate de sodium, persulfate de potassium, persulfate d'ammonium et leurs mélanges. De manière particulièrement préférée, la réaction de polymérisation met en œuvre un composé générateur de radicaux choisi parmi peroxyde d'hydrogène et persulfate de sodium.

De manière également préférée, la réaction de polymérisation met en œuvre, par rapport à la quantité en poids de monomère :
- de 2 % en poids à 8 % en poids, de préférence de 2,5 % en poids à 7 % en poids ou de 2,5 % en poids à 6 % en poids d'hypophosphite de sodium ou
- de 0,01 % en poids à 1,5 % en poids, de préférence de 0,01 % en poids à 1,2 % en poids ou de 0,05 % en poids à 1,5 % en poids, plus préférentiellement de 0,05 % en poids à 1,2 % en poids ou de 0,1 % en poids à 1 % en poids de dipropionate trithiocarbonate disodique (DPTTC) ou
- de 0,1 % en poids à 5 % en poids de composé générateur de radicaux ou, de préférence, de 0,5 % en poids à 4,5 % en poids de peroxyde d'hydrogène ou de 0,1 % en poids à 4 % en poids de persulfate de sodium, de persulfate de potassium ou de persulfate d'ammonium.

De manière également préférée, la réaction de polymérisation met en œuvre, par rapport à la quantité en poids de monomère :
- de 2 % en poids à 8 % en poids, de préférence de 2,5 % en poids à 7 % en poids ou de 2,5 % en poids à 6 % en poids d'hypophosphite de sodium ou
- de 0,01 % en poids à 1,5 % en poids, de préférence de 0,01 % en poids à 1,2 % en poids ou de 0,05 % en poids à 1,5 % en poids, plus préférentiellement de 0,05 % en poids à 1,2 % en poids ou de 0,1 % en poids à 1 % en poids de dipropionate trithiocarbonate disodique (DPTTC) ou
- de 0,5 % en poids à 4,5 % en poids de peroxyde d'hydrogène ou de 0,1 % en poids à 4 % en poids de persulfate de sodium, de persulfate de potassium ou de persulfate d'ammonium.

De manière plus préférée, la réaction de polymérisation met en œuvre, par rapport à la quantité en poids de monomère :
- de 2 % en poids à 8 % en poids, de préférence de 2,5 % en poids à 7 % en poids ou de 2,5 % en poids à 6 % en poids d'hypophosphite de sodium,
- de 0,01 % en poids à 1,5 % en poids, de préférence de 0,01 % en poids à 1,2 % en poids ou de 0,05 % en poids à 1,5 % en poids, plus préférentiellement de 0,05 % en poids à 1,2 % en poids ou de 0,1 % en poids à 1 % en poids de dipropionate trithiocarbonate disodique (DPTTC) et
- de 0,1 % en poids à 5 % en poids de composé générateur de radicaux ou, de préférence, de 0,5 % en poids à 4,5 % en poids de peroxyde d'hydrogène ou de 0,1 % en poids à 4 % en poids de persulfate de sodium, de persulfate de potassium ou de persulfate d'ammonium.

De manière également plus préférée, la réaction de polymérisation met en œuvre, par rapport à la quantité en poids de monomère :
- de 2 % en poids à 8 % en poids, de préférence de 2,5 % en poids à 7 % en poids ou de 2,5 % en poids à 6 % en poids d'hypophosphite de sodium,
- de 0,01 % en poids à 1,5 % en poids, de préférence de 0,01 % en poids à 1,2 % en poids ou de 0,05 % en poids à 1,5 % en poids, plus préférentiellement de 0,05 % en poids à 1,2 % en poids ou de 0,1 % en poids à 1 % en poids de dipropionate trithiocarbonate disodique (DPTTC) et
- de 0,5 % en poids à 4,5 % en poids de peroxyde d'hydrogène ou de 0,1 % en poids à 4 % en poids de persulfate de sodium, de persulfate de potassium ou de persulfate d'ammonium.

Lors de la mise en œuvre du peroxyde d'hydrogène associé à un ion choisi parmi Fe^{II}, Fe^{III}, Cu^{I}, Cu^{II}, ces ions peuvent être introduits au moyen de différents composés chimiques.

Comme exemples de composés chimiques permettant d'introduire des ions Fe^{II}, Fe^{III}, Cu^{I}, Cu^{II}, on peut citer sulfate de fer, sulfate de fer hydraté, sulfate de fer hemi-hydraté, sulfate de fer heptahydraté, carbonate de fer, carbonate de fer hydraté, carbonate de fer hemi-hydraté, chlorure de fer, carbonate de cuivre, carbonate de cuivre hydraté, carbonate de cuivre hemi-hydraté, acétate de cuivre, sulfate de cuivre, sulfate de cuivre pentahydraté, hydroxyde de cuivre, halogénure de cuivre.

La masse moléculaire moyenne en poids Mw (mesurée par CES ou Chromatographie d'Exclusion Stérique) du polymère mis en œuvre selon l'invention est inférieure à 8 000 g/mol, elle peut varier assez largement. De manière également préférée, le polymère selon l'invention a une masse moléculaire moyenne en poids Mw inférieure à 7 500 g/mol, de préférence inférieure à 6 500 g/mol, inférieure à 6 000 g/mol, plus préférentiellement inférieure à 5 500 g/mol.

De manière également préférée, le polymère selon l'invention a une masse moléculaire moyenne en poids Mw supérieure à 1 000 g/mol ou supérieure à 1 200 g/mol ou supérieure à 1 500 g/mol.

Ainsi, le polymère selon l'invention a préférentiellement une masse moléculaire moyenne en poids Mw allant de 1 000 g/mol à 7 500 g/mol, 6 500 g/mol, 6 000 g/mol ou 5 500 g/mol.

Plus préférentiellement, le polymère selon l'invention a une masse moléculaire moyenne en poids Mw allant de 1 200 g/mol à 7 500 g/mol, 6 500 g/mol, 6 000 g/mol ou 5 500 g/mol.

Encore plus préférentiellement, le polymère selon l'invention a une masse moléculaire moyenne en poids Mw allant de 1 500 g/mol à 7 500 g/mol, 6 500 g/mol, 6 000 g/mol ou 5 500 g/mol.

De manière particulièrement préférée, le polymère selon l'invention a une masse moléculaire moyenne en poids Mw allant de 3 500 g/mol à 5 500 g/mol. De manière également particulièrement préférée, le polymère selon l'invention a une masse moléculaire moyenne en poids Mw allant de 4 500 g/mol à 5 500 g/mol.

Selon l'invention, l'indice de polymolécularité IP, ou indice de polydispersité, du polymère mis en œuvre est inférieur à 3. De manière préférée, l'indice de polymolécularité IP du polymère est inférieur à 2,8. De manière également préférée, l'indice de polymolécularité IP du polymère va de 1,5 à 3. De manière plus préférée, l'indice de polymolécularité IP du polymère va de 1,5 à 2,8 ou de 1,5 à 2,5.

Une étape essentielle de la préparation du polymère mis en œuvre selon l'invention est la réaction de polymérisation radicalaire d'au moins un monomère anionique comprenant au moins une insaturation oléfinique polymérisable et une fonction acide carboxylique. La réaction de polymérisation est connue en tant que telle. De manière préférée, elle peut être effectuée à une température supérieure à 80°C ou supérieure à 95°C. Elle peut être réalisée dans un solvant choisi parmi eau, solvants organiques et leurs mélanges, de préférence dans l'eau.

De manière préférée selon l'invention, le monomère anionique comprenant au moins une insaturation oléfinique polymérisable et une fonction acide carboxylique est choisi parmi acide acrylique, acide méthacrylique, un sel d'acide acrylique, un sel d'acide méthacrylique et leurs mélanges.

De manière particulièrement préférée selon l'invention, le monomère anionique comprenant au moins une insaturation oléfinique polymérisable et une fonction acide carboxylique est l'acide acrylique. De manière plus particulièrement préférée selon l'invention, la réaction de polymérisation radicalaire ne met en œuvre que de l'acide acrylique.

Néanmoins, outre le monomère anionique comprenant au moins une insaturation oléfinique polymérisable et une fonction acide carboxylique, la réaction de polymérisation radicalaire peut mettre en œuvre au moins un autre monomère. De manière préférée, la réaction de polymérisation peut alors également mettre en œuvre au moins un monomère choisi parmi :
- un autre monomère anionique comprenant au moins une insaturation oléfinique différent choisi parmi acide acrylique, acide méthacrylique, acide itaconique, acide maléique, leurs sels et leurs mélanges,
- un monomère non ionique comprenant au moins une insaturation oléfinique polymérisable, de préférence au moins une insaturation éthylénique polymérisable et notamment une fonction vinylique polymérisable, plus préférentiellement un monomère non ionique choisi parmi les esters d'un acide comprenant au moins une fonction acide monocarboxylique, en particulier un ester d'un acide choisi parmi acide acrylique, acide méthacrylique, et leurs mélanges, par exemple styrène, vinylcaprolactam, acrylate d'alkyle, en particulier acrylate de Ci-Cio-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de Ci-Cio-alkyl, préférentiellement méthacrylate de C₁-C₄-alkyl, plus préférentiellement méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate, un composé de formule (I) :

   R¹-(L¹)ₘ-(L²)ₙ-R² (I)

   dans laquelle :
   ∘ R¹ représente un groupement acrylate polymérisable ou un groupement méthacrylate polymérisable,
   ∘ R² représente un groupement OH ou un groupement OCH₃,
   ∘ L¹ et L², identiques ou différents, représentent indépendamment un groupement éthyloxy ou un groupement propyloxy et
   ∘ m et n, identiques ou différents et dont au moins un est différent de 0, représentent un nombre inférieur ou égal à 150 et leur somme m+n est inférieure à 150 et
- acide 2-acrylamido-2-méthylpropane sulfonique, un sel d'acide 2-acrylamido-2-méthylpropane sulfonique, l'acide 2-(méthacryloyloxy)éthanesulfonique, un sel d'acide 2-(méthacryloyloxy)éthanesulfonique (n° CAS 010595-80-9), méthallyl sulfonate de sodium, styrène sulfonate et leurs mélanges.

Lors de la réaction de polymérisation, les quantités de monomère anionique comprenant au moins une insaturation oléfinique polymérisable et une fonction acide carboxylique peuvent varier assez largement. De manière préférée, la réaction de polymérisation met en œuvre 100 % en poids de ce monomère anionique.

De manière analogue, les quantités d'autres monomères peuvent également varier assez largement. De manière préférée, la réaction de polymérisation peut alors mettre en œuvre de 70 % à 99,5 % en poids de monomère anionique comprenant au moins une insaturation oléfinique polymérisable et une fonction acide carboxylique et de 0,5 % à 30 % en poids d'au moins un monomère choisi parmi :
- un autre monomère anionique différent choisi parmi acide acrylique, acide méthacrylique, acide itaconique, acide maléique, leurs sels et leurs mélanges,
- un monomère non ionique comprenant au moins une insaturation oléfinique polymérisable, de préférence au moins une insaturation éthylénique polymérisable et notamment une fonction vinylique polymérisable, plus préférentiellement un monomère non ionique choisi parmi les esters d'un acide comprenant au moins une fonction acide monocarboxylique, en particulier un ester d'un acide choisi parmi acide acrylique, acide méthacrylique, et leurs mélanges, par exemple styrène, vinylcaprolactam, acrylate d'alkyle, en particulier acrylate de Ci-Cio-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de Ci-Cio-alkyl, préférentiellement méthacrylate de C₁-C₄-alkyl, plus préférentiellement méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate, un composé de formule (I) :

   R¹-(L¹)ₘ-(L²)ₙ-R² (I)

   dans laquelle :
   ∘ R¹ représente un groupement acrylate polymérisable ou un groupement méthacrylate polymérisable,
   ∘ R² représente un groupement OH ou un groupement OCH₃,
   ∘ L¹ et L², identiques ou différents, représentent indépendamment un groupement éthyloxy ou un groupement propyloxy et
   ∘ m et n, identiques ou différents et dont au moins un est différent de 0, représentent un nombre inférieur ou égal à 150 et leur somme m+n est inférieure à 150 et
- acide 2-acrylamido-2-méthylpropane sulfonique, un sel d'acide 2-acrylamido-2-méthylpropane sulfonique, l'acide 2-(méthacryloyloxy)éthanesulfonique, un sel d'acide 2-(méthacryloyloxy)éthanesulfonique, méthallyl sulfonate de sodium, styrène sulfonate et leurs mélanges.

De manière préférée, la méthode de broyage selon l'invention met en œuvre un polymère totalement ou partiellement neutralisé. Selon l'invention, la neutralisation du polymère mis en œuvre est réalisée en neutralisant ou en salifiant tout ou partie des fonctions acides carboxyliques présentes au sein du polymère.

De manière préférée, la neutralisation est réalisée au moyen d'une base, par exemple au moyen d'un dérivé de métal alcalin ou d'un dérivé de métal alcalino-terreux. Les bases préférées sont choisies parmi NaOH, KOH, NH₄OH, Ca(OH)₂, Mg(OH)₂, monoisopropylamine, triéthanolamine, triisopropylamine, 2-amino-2-méthyl-1-propanol (AMP), triéthylamine, diéthylamine, monoéthylamine. De manière particulièrement préférée, la neutralisation est réalisée au moyen de NaOH, Ca(OH)₂, Mg(OH)₂, seuls ou combinés.

Lors de la préparation du polymère selon l'invention, une étape de séparation peut également être mise en œuvre. Selon l'invention, la séparation peut être mise en œuvre après la neutralisation totale ou partielle du polymère utilisé selon l'invention. Elle peut également être mise en œuvre avant la neutralisation du polymère.

La solution aqueuse du polymère, totalement ou partiellement neutralisé, peut être traitée selon des procédés de fractionnement statiques ou dynamiques connus en tant que tels. On utilise alors un ou plusieurs solvants polaires appartenant notamment au groupe constitué par méthanol, éthanol, n-propanol, isopropanol, butanols, acétone, tétrahydrofurane, produisant ainsi une séparation en deux phases. Lors de la séparation, la phase la moins dense comporte la majeure fraction du solvant polaire et la fraction de polymères de bas poids moléculaire, la phase aqueuse la plus dense comporte la fraction de polymères de plus haut poids moléculaire. La température à laquelle s'effectue le traitement de sélection de la fraction de polymère peut influencer le coefficient de partage. Elle est généralement comprise entre 10°C et 80°C, de préférence entre 20°C et 60°C. Lors de la séparation, il est important de contrôler le rapport des quantités d'eau de dilution et de solvants polaires.

Lors de la mise en œuvre d'une méthode de séparation dynamique, par exemple par centrifugation, les rapports des fractions extraites dépendent généralement des conditions de centrifugation. La sélection de la fraction des polymères peut également être améliorée en traitant à nouveau la phase aqueuse la plus dense, au moyen d'une nouvelle quantité de solvant polaire, qui peut être différent. Il peut également s'agir d'un mélange de solvants polaires. Enfin, la phase liquide obtenue après traitement peut être soumise à distillation pour éliminer le ou les solvants utilisés pour le traitement.

Outre une méthode de broyage, l'invention concerne également une méthode de préparation d'une suspension aqueuse de particules de matière minérale comprenant la mise en œuvre de la méthode de broyage selon l'invention.

De manière préférée, la méthode de préparation selon l'invention permet de préparer une suspension aqueuse dont l'extrait sec en matière minérale est supérieur à 60 % en poids.

De manière plus préférée, la méthode de préparation selon l'invention permet de préparer une suspension aqueuse dont l'extrait sec en matière minérale est supérieur à 70 % en poids.

De manière bien plus préférée, la méthode de préparation selon l'invention permet de préparer une suspension aqueuse dont l'extrait sec en matière minérale est supérieur à 75 % en poids ou à 80 % en poids de la suspension.

Les caractéristiques particulières, avantageuses ou préférées de la méthode de broyage selon l'invention définissent des méthodes de préparation d'une suspension aqueuse selon l'invention qui sont également particulières, avantageuses ou préférées.

L'invention fournit également une composition aqueuse comprenant des particules de matière minérale broyée et au moins un polymère définis pour la méthode de broyage selon l'invention.

De manière avantageuse, la composition selon l'invention peut également comprendre au moins un adjuvant, en particulier au moins un adjuvant choisi parmi agents dispersants, agents anti-mousse, agents biocides, agents colorants, agents lubrifiants et agents azurants optiques.

De manière avantageuse, la composition selon l'invention peut également comprendre au moins un agent liant, notamment un agent liant naturel comme l'amidon ou un agent liant synthétique comme un latex.

L'invention fournit également une méthode de préparation d'une sauce de couchage papetière comprenant le broyage, en présence d'eau, d'au moins une matière minérale en présence d'au moins un polymère obtenu par une réaction de polymérisation radicalaire dans l'eau, à une température supérieure à 50°C, d'au moins un monomère anionique comprenant au moins une insaturation oléfinique polymérisable et une fonction acide carboxylique, en présence :
- d'hypophosphite de sodium,
- de dipropionate trithiocarbonate disodique (DPTTC) et
- d'au moins un composé générateur de radicaux choisi parmi peroxyde d'hydrogène, persulfate d'ammonium, un persulfate de métal alcalin, du peroxyde d'hydrogène associé à un ion choisi parmi Fe^{II}, Fe^{III}, Cu^{I}, Cu^{II} et leurs mélanges.

L'invention concerne également l'utilisation comme agent d'aide au broyage d'au moins une matière minérale, d'au moins un polymère obtenu par une réaction de polymérisation radicalaire dans l'eau, à une température supérieure à 50°C, d'au moins un monomère anionique comprenant au moins une insaturation oléfinique polymérisable et une fonction acide carboxylique, en présence :
- d'hypophosphite de sodium,
- de dipropionate trithiocarbonate disodique (DPTTC) et
- d'au moins un composé générateur de radicaux choisi parmi peroxyde d'hydrogène, persulfate d'ammonium, un persulfate de métal alcalin, du peroxyde d'hydrogène associé à un ion choisi parmi Fe^{II}, Fe^{III}, Cu^{I}, Cu^{II} et leurs mélanges.

De manière préférée pour l'utilisation comme agent d'aide au broyage selon l'invention, le polymère mis en œuvre est le polymère anionique de la méthode de broyage selon l'invention.

L'invention fournit également une méthode de préparation de papier comprenant l'utilisation d'une composition aqueuse selon l'invention.

Les caractéristiques particulières, avantageuses ou préférées de la méthode de broyage selon l'invention définissent des compositions aqueuses, des utilisations et des méthodes de préparation selon l'invention qui sont également particulières, avantageuses ou préférées.

Les exemples qui suivent permettent d'illustrer les différents aspects de l'invention. Les méthodes ou techniques mises en œuvre sont connues ou décrites.

### EXEMPLES

### Masse moléculaire par Chromatographie d'Exclusion Stérique (CES)

Les poids moléculaires et indices de polymolécularité des polymères obtenus par une réaction de polymérisation radicalaire dans l'eau, à une température supérieure à 50°C, d'au moins un monomère comprenant au moins une insaturation oléfinique polymérisable et une fonction acide carboxylique sont déterminés par chromatographie d'exclusion stérique.

Une prise d'essai de la solution de polymère correspondant à 90 mg de matière sèche est introduite dans un flacon de 10 mL. Il est ajouté de la phase mobile, additionnée de 0,04 % de diméthylformamide (DMF), jusqu'à une masse totale de 10 g. La composition de cette phase mobile est la suivante : NaHCO₃ : 0,05 mol/L, NaNO₃ : 0,1 mol/L, triéthanolamine : 0,02 mol/L, NaN₃ 0,03 % massique.

La chaîne de CES est composée d'une pompe isocratique de type Waters 510, dont le débit est réglé à 0,8 mL/min, d'un passeur d'échantillons Waters 717+, d'un four contenant une précolonne de type Guard Column Ultrahydrogel Waters de 6 cm de longueur et 40 mm de diamètre intérieur, suivie d'une colonne linéaire de type Ultrahydrogel Waters de 30 cm de longueur et 7,8 mm de diamètre intérieur.

La détection est assurée au moyen d'un réfractomètre différentiel de type RI Waters 410.

Le four est porté à la température de 60°C et le réfractomètre est porté à la température de 45°C.

Le dispositif de CES est étalonné avec une série d'étalons polyacrylate de sodium fournis par Polymer Standard Service de poids moléculaire au sommet de pic compris entre 1 000 g/mol et 1.10⁶ g/mol et d'indice de polymolécularité compris entre 1,4 et 1,7, ainsi qu'avec un polyacrylate de sodium de poids moléculaire égal à 5 600 g/mol et d'indice de polymolécularité égal à 2,4. La courbe d'étalonnage est de type linéaire et prend en compte la correction obtenue grâce au marqueur de débit : le diméthylformamide (DMF).

L'acquisition et le traitement du chromatogramme sont effectués par l'utilisation du logiciel PSS WinGPC Scientific v 4.02. Le chromatogramme obtenu est intégré dans la zone correspondant à des poids moléculaires supérieurs à 65 g/mol.

### Technique de broyage et mesure de la granulométrie

À l'aide d'une pompe péristaltique, des suspensions de grains grossiers de matière minérale préparées en présence d'un polymère selon l'invention ou d'un polymère comparatif sont introduites dans un broyeur Dyno Mill de type KDL pilote 1,4 L contenant 2 850 g de billes en céramique de type ER 120 S de 0,6 mm à 1,0 mm de diamètre en provenance de la société ZirPro. Les conditions de broyage sont ajustées de manière à obtenir une suspension de particules de matière minérale de granulométrie souhaitée. La quantité nécessaire de polymère introduite dans le système est ajustée afin d'atteindre la granulométrie souhaitée. Cette suspension est ensuite caractérisée par une mesure granulométrique, une mesure de viscosité Brookfield suivie d'un test de stabilité. Ce test de stabilité consiste à mesurer la viscosité Brookfield de la suspension broyée après un temps de repos de 8 jours à une température de 25°C ± 1°C.

Les caractéristiques granulométriques relatives à la préparation de particules de matière minérale sont déterminées à partir d'un appareil SediGraph III 5120 (Micromeritics, USA). De manière connue, cette méthode ainsi que cet instrument de mesure permettent de mesurer la répartition granulométrique des suspensions de particules de matière minérale. Ils permettent notamment de déterminer la fraction massique en pourcentage d'une population de particules minérales dont le diamètre sphérique équivalent est inférieur à 1 µm ou bien à 2 µm (esd < 1µm ou bien esd < 2 µm, tous les deux exprimés en %). Ces mesures sont réalisées à partir d'une suspension de particules de matière minérale diluée à une concentration d'environ 33 g de matière sèche par litre de solution d'un polyacrylate de sodium de poids moléculaire égal à 4 000 g/mol et de concentration égale à 1,6 g de polyacrylate de sodium sec par litre de solution. Cet échantillon est dispersé et soniqué avant la mesure.

### Mesure de viscosité Brookfield

Les viscosités Brookfield (mPa.s) des suspensions de particules de matière minérale préparées selon la méthode de l'invention sont mesurées après l'opération de broyage (VB0) et après 8 jours de repos (VB8), à 25°C ± 1°C et à une vitesse de rotation de 100 tour/min à l'aide d'un viscosimètre Brookfield DVIII équipé d'un module adapté, par exemple 2 à 5.

### Exemple 1 : préparation de polymères co-neutralisés selon l'invention

Dans un réacteur agité, on introduit un mélange (R) d'eau et d'hypophosphite de sodium. Puis, on prépare le mélange 1 (M1), le mélange 2 (M2) et le mélange 3 (M3) à partir d'eau, d'acide acrylique (AA), de peroxyde d'hydrogène ou de persulfate de sodium, d'hypophosphite de sodium et de DPTTC. On chauffe alors le réacteur de manière à atteindre la température (T en °C) de polymérisation et on introduit en parallèle les mélanges 1, 2 et 3 dans le réacteur. Enfin, on refroidit le réacteur et on neutralise le polymère en injectant le mélange (MN) de neutralisation préalablement préparé. Les quantités (en g) de réactifs, les conditions réactionnelles ainsi que les caractéristiques des polymères (extrait sec ES, masse moléculaire Mw et indice de polymolécularité IP) préparés sont présentées dans les Tableaux 1, 2 et 3.

**Tableau 1**

| Exemple | | **1-1** | **1-2** | **1-3** | **1-4** | **1-5** | **1-6** | **1-7** | **1-8** |
|---|---|---|---|---|---|---|---|---|---|
| R | eau | 282,8 | 282,8 | 198 | 198 | 198 | 277,2 | 277,2 | 282,8 |
| | NaH₂PO₂.H₂O | 2,61 | 2,47 | 15 | 13 | 9 | 12 | 12 | 2,72 |
| M1 | AA | 439,8 | 439,8 | 208,6 | 208,6 | 208,6 | 205,6 | 205,6 | 439,8 |
| | DPTTC à 20 % | 0 | 0 | 13,41 | 13,41 | 13,41 | 4,26 | 4,26 | 0 |
| | eau | 48,8 | 48,8 | 0 | 0 | 0 | 0 | 0 | 48,8 |
| M2 | H₂O₂ à 35 % | 0 | 0 | 7,1 | 7,1 | 7,1 | 3,5 | 4,5 | 0 |
| | persulfate de Na | 6,96 | 6,56 | 0 | 0 | 0 | 0 | 0 | 1,85 |
| | eau | 97,1 | 97,1 | 130 | 130 | 130 | 27,2 | 27,2 | 97,1 |
| M3 | NaH₂PO₂.H₂O | 23,45 | 22,21 | 0 | 0 | 0 | 0 | 0 | 24,44 |
| | DPTTC à 20 % | 0,23 | 2,2 | 0 | 0 | 0 | 0 | 0 | 0,23 |
| | eau | 81,2 | 81,2 | 0 | 0 | 0 | 0 | 0 | 81,2 |
| MN | eau | 471,9 | 471,9 | 185 | 185 | 185 | 185 | 185 | 489,4 |
| | NaOH à 50 % | 238,1 | 241,1 | 113,6 | 113,6 | 115,9 | 104,3 | 104,3 | 239,5 |
| | Ca(OH)₂ à 97 % | 116,1 | 117,2 | 55,31 | 55,31 | 56,44 | 62,08 | 62,08 | 117,9 |
| | T(°C) | 97±1 | 97±1 | 90±2 | 90±2 | 90±2 | 90±2 | 90±2 | 97±1 |
| | ES (%) | 36 | 35,2 | 33,16 | 32,62 | 32,67 | 34,11 | 33,98 | 35,1 |
| | Mw (g/mol) | 4 845 | 4 915 | 4 205 | 4 910 | 6 375 | 5 780 | 5 890 | 4 915 |
| | IP | 2,2 | 2,2 | 2,2 | 2,3 | 2,5 | 2,4 | 2,3 | 2,1 |

**Tableau 2**

| Exemple | | **2-1** | **2-2** | **2-3** | **2-4** | **2-5** | **2-6** |
|---|---|---|---|---|---|---|---|
| R | Eau | 198 | 198 | 198 | 198 | 198 | 198 |
| | NaH₂PO₂.H₂O | 11 | 11,5 | 12 | 13 | 14 | 15 |
| M1 | AA | 208,65 | 208,65 | 208,65 | 208,65 | 208,65 | 208,65 |
| | DPTTC à 20 % | 13,41 | 13,41 | 13,41 | 13,41 | 13,41 | 13,41 |
| | Eau | 23,18 | 0 | 23,18 | 23,18 | 23,18 | 23,18 |
| M2 | H₂O₂ à 35 % | 7,1 | 7,1 | 7,1 | 7,1 | 7,1 | 7,1 |
| | persulfate de Na | 0 | 0 | 0 | 0 | 0 | 0 |
| | Eau | 130 | 130 | 130 | 130 | 130 | 130 |
| M3 | NaH₂PO₂.H₂O | 0 | 0 | 0 | 0 | 0 | 0 |
| | DPTTC à 20 % | 0 | 0 | 0 | 0 | 0 | 0 |
| | Eau | 0 | 0 | 0 | 0 | 0 | 0 |
| MN | Eau | 170 | 170 | 170 | 170 | 170 | 170 |
| | NaOH à 50 % | 160,66 | 159,85 | 160,66 | 159,03 | 159,85 | 159,85 |
| | Ca(OH)₂ à 97 % | 33,52 | 33,35 | 33,52 | 33,18 | 33,35 | 33,35 |
| | T (°C) | 90±2 | 90±2 | 90±2 | 90±2 | 90±2 | 90±2 |
| | ES (%) | 31,69 | 32,5 | 31,69 | 31,68 | 31,38 | 31,5 |
| | Mw (g/mol) | 6 165 | 5 465 | 5 640 | 5 225 | 5 145 | 4 590 |
| | IP | 2,4 | 2,5 | 2,3 | 2,3 | 2,3 | 2,2 |

**Tableau 3**

| Exemple | | **3-1** | **3-2** | **3-3** | **3-4** |
|---|---|---|---|---|---|
| R | Eau | 198 | 198 | 198 | 198 |
| | NaH₂PO₂.H₂O | 14 | 13 | 12 | 15 |
| M1 | AA | 208,65 | 208,65 | 208,65 | 231,83 |
| | DPTTC à 20 % | 13,41 | 13,41 | 13,41 | 13,41 |
| | Eau | 23,18 | 23,18 | 23,18 | 23,18 |
| M2 | H₂O₂ à 35 % | 7,1 | 7,1 | 7,1 | 7,1 |
| | persulfate de Na | 0 | 0 | 0 | 0 |
| | Eau | 130 | 130 | 130 | 130 |
| M3 | NaH₂PO₂.H₂O | 0 | 0 | 0 | 0 |
| | DPTTC à 20 % | 0 | 0 | 0 | 0 |
| | Eau | 0 | 0 | 0 | 0 |
| MN | Eau | 0 | 0 | 0 | 0 |
| | NaOH à 50 % | 228 | 228 | 228 | 228 |
| | Ca(OH)₂ à 97 % | 0 | 0 | 0 | 0 |
| | T (°C) | 90±2 | 90±2 | 90±2 | 90±2 |
| | ES (%) | 36,13 | 36,73 | 36,65 | 36,63 |
| | Mw (g/mol) | 5 010 | 4 830 | 5 325 | 4 445 |
| | IP | 2,2 | 2,2 | 2,3 | 2,2 |

### Exemple 2 : préparation de polymères co-neutralisés comparatifs

De manière analogue à l'exemple 1, on prépare des polymères comparatifs. Les quantités (en g) de réactifs, les conditions réactionnelles ainsi que les caractéristiques des polymères préparés sont présentées dans le Tableau 4.

**Tableau 4**

| Exemple | | **C1** | **C2** | **C3** | **C4** |
|---|---|---|---|---|---|
| R | Eau | 282,8 | 244,40 | 224,93 | 262,71 |
| | CuSO₄.5H₂O | 0 | 0,32 | 0,30 | 0,35 |
| | FeSO₄.7H₂O | 0 | 0,28 | 0,25 | 0,30 |
| | NaH₂PO₂.H₂O | 2,74 | 0 | 0 | 0 |
| M1 | AA | 439,82 | 279,82 | 257,91 | 301,8 |
| | DPTTC à 20 % | 0 | 0 | 0 | 0 |
| | Eau | 48,8 | 0 | 0 | 0 |
| M2 | H₂O₂ à 35 % | 0 | 35,33 | 32,57 | 38,11 |
| | persulfate de Na | 7,33 | 0 | 0 | 0 |
| | Eau | 97,1 | 9,34 | 8,62 | 10,07 |
| M3 | NaH₂PO₂.H₂O | 24,68 | 0 | 0 | 0 |
| | DPTTC à 20 % | 0 | 3,47 | 3,55 | 3,74 |
| | Eau | 81,2 | 31,15 | 28,71 | 25,52 |
| MN | Eau | 357,37 | 127,99 | 226,73 | 27,86 |
| | NaOH à 50 % | 248,91 | 144,99 | 80,35 | 323,53 |
| | Ca(OH)₂ à 97 % | 118,63 | 42,41 | 60,18 | 0 |
| | T (°C) | 97±1 | 93±1 | 93±1 | 93±1 |
| | ES (%) | 35,3 | 38 | 35 | 41,2 |
| | Mw (g/mol) | 4710 | 5 700 | 5 700 | 5 700 |
| | IP | 2,1 | 2,6 | 2,5 | 2,6 |

### Exemple 3 : broyage de carbonate de calcium d'esd inférieur à 1 µm égal à 80 % en poids

Les polymères selon l'invention et un polymère comparatif sont utilisés comme agent d'aide au broyage de carbonate de calcium naturel. Les différents polymères sont utilisés aux mêmes doses et dans les mêmes conditions opératoires.

On prépare des suspensions aqueuses de carbonate de calcium naturel ayant une teneur en poids de solide de 76 % ± 1 %. Elles sont préparées en présence d'une quantité de 1,07 % en poids sec d'une solution aqueuse de polymère, en tant qu'agent d'aide au broyage, par rapport à la quantité sèche de carbonate de calcium engagé dans cette opération de broyage en vue d'atteindre la granulométrie visée. Les solutions de polymère ont une concentration de 35 % ± 1 % en matière active et un pH de 8,5 ± 0,5. La matière première pour préparer ces suspensions aqueuses est une suspension aqueuse de carbonate de calcium de grains grossiers à 75 % ± 1 % de teneur en poids de solide. Le carbonate de calcium est un marbre grossier (produit commercial Omyacarb 10 AV Omya) en provenance de la région de Carrare (Italie). Les conditions de broyage sont ajustées de manière à obtenir une suspension de particules minérales dont 80,0 % ± 0,5 % en poids de sa population a un diamètre sphérique équivalent inférieur à 1 µm (esd < 1µm = 80,0 % ± 0,5 %).

Les suspensions selon l'invention et la suspension comparative sont ensuite analysées et caractérisées par des mesures de viscosité Brookfield après l'opération de broyage puis après 8 jours de repos à 25°C. Les résultats sont présentés dans le Tableau 5.

**Tableau 5**

| Suspension | Polymère | VB0 | VB8 |
|---|---|---|---|
| S1-1 | 1-1 | 291 | 650 |
| S1-2 | 1-2 | 299 | 645 |
| S1-3 | 1-3 | 232 | 750 |
| SC1 | C1 | 310 | 983 |

L'utilisation des agents d'aide au broyage selon l'invention permet de préparer des suspensions de carbonate de calcium broyé de faible viscosité. Les viscosités de ces suspensions évoluent dans le temps sur une période de 8 jours de manière plus faible que celle de la suspension préparée en présence du polymère comparatif. Les suspensions préparées selon l'invention possèdent donc des viscosités plus faibles que celles de la suspension de l'essai comparatif. Elles sont plus stables.

### Exemple 4 : broyage de carbonate de calcium d'esd inférieur à 1 µm égal à 80 % en poids

Les polymères selon l'invention et un polymère comparatif sont utilisés comme agent d'aide au broyage de carbonate de calcium naturel. Les différents polymères sont utilisés aux mêmes doses et dans les mêmes conditions opératoires.

On prépare ainsi des suspensions aqueuses de carbonate de calcium naturel ayant une teneur en poids de solide de 76 % ± 1 %. Elles sont préparées en présence d'une quantité efficace (QE - exprimée en % sec/sec) en poids sec d'une solution aqueuse de polymère rapporté à 100 g de carbonate de calcium sec, en tant qu'agent d'aide au broyage, en vue d'atteindre la granulométrie visée. Les solutions de polymère ont une concentration de 35 % ± 1 % en matière active et un pH de 8,5 ± 0,5. La matière première pour préparer ces suspensions aqueuses est une suspension aqueuse de carbonate de calcium de grains grossiers à 75 % ± 1 % de teneur en poids de solide. Le carbonate de calcium est une calcite grossière (produit commercial BL 200 Omya) en provenance de la région d'Orgon (France).

Les conditions de broyage sont ajustées de manière à obtenir une suspension de particules minérales dont 80,0 % ± 0,5 % en poids de sa population a un diamètre sphérique équivalent inférieur à 1 µm (esd < 1µm = 80,0 % ± 0,5 %).

Les suspensions de carbonate de calcium sont ensuite analysées et caractérisées par des mesures de viscosité Brookfield après l'opération de broyage puis après 8 jours de repos à 25°C. La quantité efficace (QE) de polymère sec pour atteindre la granulométrie visée est également mesurée. Les résultats sont présentés dans le Tableau 6.

**Tableau 6**

| Suspension | Polymère | QE | VB0 | VB8 |
|---|---|---|---|---|
| S2-1 | 2-1 | 0,93 | 679 | 1 356 |
| S2-2 | 2-2 | 0,99 | 508 | 1 406 |
| S2-3 | 2-3 | 0,96 | 670 | 1 352 |
| S2-4 | 2-4 | 0,95 | 547 | 1 226 |
| S2-5 | 2-5 | 0,95 | 580 | 1 326 |
| SC2 | C2 | 1,05 | 1 019 | 1 786 |

La mise en œuvre des polymères selon l'invention permet une réduction de la quantité efficace d'agent d'aide au broyage. À nouveau, l'utilisation des agents d'aide au broyage selon l'invention permet de préparer des suspensions de carbonate de calcium broyé de faible viscosité. Les viscosités de ces suspensions évoluent dans le temps sur une période de 8 jours de manière plus faible que celle de la suspension préparée en présence du polymère comparatif. Les suspensions préparées selon l'invention possèdent donc des viscosités plus faibles que celles de la suspension de l'essai comparatif. Elles sont plus stables.

### Exemple 5 : broyage de carbonate de calcium d'esd inférieur à 2 µm égal à 60 % en poids

Les polymères selon l'invention et un polymère comparatif sont utilisés comme agent d'aide au broyage de carbonate de calcium naturel. Les différents polymères sont utilisés aux mêmes doses et dans les mêmes conditions opératoires.

On prépare ainsi des suspensions aqueuses de carbonate de calcium naturel ayant une teneur en poids de solide de 74 % ± 1 %. Elles sont préparées en présence d'une quantité de 0,26 % en poids sec d'une solution aqueuse de polymère, en tant qu'agent d'aide au broyage, par rapport à la quantité sèche de carbonate de calcium engagé dans cette opération de broyage en vue d'atteindre la granulométrie visée. Les solutions de polymère ont une concentration de 35 % ± 1 % en matière active et un pH de 8,5 ± 0,5. La matière première pour préparer ces suspensions aqueuses est une suspension aqueuse de carbonate de calcium de grains grossiers à 75 % ± 1 % de teneur en poids de solide. Le carbonate de calcium est un marbre grossier (produit commercial Omyacarb 10 AV Omya) en provenance de la région de Carrare (Italie). Les conditions de broyage sont ajustées de manière à obtenir une suspension de particules minérales dont 60,0 % ± 0,5 % en poids de sa population a un diamètre sphérique équivalent inférieur à 2 µm (esd < 2µm = 60,0 % ± 0,5 %).

Les suspensions de carbonate de calcium sont ensuite analysées et caractérisées par des mesures de viscosité Brookfield après l'opération de broyage puis après 8 jours de repos à 25°C. Les résultats sont présentés dans le Tableau 7.

**Tableau 7**

| Suspension | Polymère | VB0 | VB8 |
|---|---|---|---|
| S3-1 | 3-1 | 98 | 276 |
| S3-2 | 3-2 | 105 | 304 |
| SC3 | C3 | 123 | 450 |

À nouveau, l'utilisation des agents d'aide au broyage selon l'invention permet de préparer des suspensions de carbonate de calcium broyé de faible viscosité. Les viscosités de ces suspensions évoluent dans le temps sur une période de 8 jours de manière plus faible que celle de la suspension préparée en présence du polymère comparatif. Les suspensions préparées selon l'invention possèdent donc des viscosités plus faibles que celles de la suspension de l'essai comparatif. Elles sont plus stables.

## Revendications

1. Méthode de préparation de particules de matière minérale comprenant le broyage, en présence d'eau, d'au moins une matière minérale en présence d'au moins un polymère de masse moléculaire en poids M_{W} (mesurée par CES) inférieure à 8 000 g/mol et d'indice de polymolécularité IP inférieur à 3 comme déterminé par la méthode décrite dans la description, obtenu par une réaction de polymérisation radicalaire dans l'eau, à une température supérieure à 50°C, d'au moins un monomère anionique comprenant au moins une insaturation oléfinique polymérisable et une fonction acide carboxylique, en présence :
- d'hypophosphite de sodium,
- de dipropionate trithiocarbonate disodique (DPTTC) et
- d'au moins un composé générateur de radicaux choisi parmi peroxyde d'hydrogène, persulfate d'ammonium, un persulfate de métal alcalin, du peroxyde d'hydrogène associé à un ion choisi parmi Fe^{II}, Fe^{III}, Cu^{I}, Cu^{II} et leurs mélanges.

2. Méthode selon la revendication 1 pour laquelle :
- les particules ont une taille inférieure à 50 µm ou bien une taille allant de 0,05 µm à 50 µm ou bien une taille inférieure à 10 µm, de préférence inférieure à 5 µm ou à 2 µm, plus préférentiellement inférieure à 1 µm ou inférieure à 0,5 µm ou
- le diamètre équivalent sphérique des particules pour une taille allant de 0,05 µm à 50 µm ou inférieure à 50 µm, de préférence pour une taille inférieure à 10 µm, plus préférentiellement inférieure à 5 µm ou à 2 µm, encore plus préférentiellement inférieure à 1 µm ou inférieure à 0,5 µm, est égal à 60 % en poids ou égal à 70 % en poids ou encore égal à 80 % en poids ou bien encore égal à 90 % en poids,
dans laquelle les tailles des particules et les diamètres équivalents sphériques sont déterminées par la méthode de mesure telle que définie dans la description.

3. Méthode selon l'une des revendications 1 et 2 pour laquelle :
- une seule matière minérale ou deux ou trois matières minérales sont mises en œuvre ou pour laquelle :
- la matière minérale est synthétique ou d'origine naturelle, de préférence choisie parmi les carbonates de métal alcalino-terreux, de préférence carbonate de calcium (carbonate de calcium naturel ou carbonate de calcium précipité), carbonate de strontium, carbonate de magnésium, carbonate de baryum, dolomie, kaolin, dioxyde de titane, talc, chaux, sulfate de calcium, sulfate de baryum.

4. Méthode selon l'une des revendications 1 à 3 pour laquelle la réaction de polymérisation est réalisée dans l'eau ou dans un solvant en mélange avec de l'eau, notamment un solvant alcoolique, en particulier alcool isopropylique, de préférence dans l'eau uniquement.

5. Méthode selon l'une des revendications 1 à 4 pour laquelle le polymère :
- a une masse moléculaire moyenne en poids M_{W} inférieure à 7 500 g/mol, de préférence inférieure à 6 500 g/mol, inférieure à 6 000 g/mol, plus préférentiellement inférieure à 5 500 g/mol ou
- a une masse moléculaire moyenne en poids M_{W} supérieure à 1 000 g/mol ou supérieure à 1 200 g/mol ou supérieure à 1 500 g/mol ou
- a un indice de polymolécularité IP inférieur à 2,8 ou un indice de polymolécularité IP allant de 1,5 à 3, de 1,5 à 2,8 ou allant de 1,5 à 2, comme déterminé par la méthode décrite dans la description.

6. Méthode selon l'une des revendications 1 à 5 pour laquelle le monomère anionique est choisi parmi acide acrylique, acide méthacrylique, un sel d'acide acrylique, un sel d'acide méthacrylique et leurs mélanges, de préférence acide acrylique.

7. Méthode selon l'une des revendications 1 à 6 pour laquelle la réaction de polymérisation met également en œuvre au moins un monomère choisi parmi :
- un autre monomère anionique différent choisi parmi acide acrylique, acide méthacrylique, acide itaconique, acide maléique, leurs sels et leurs mélanges,
- un monomère non ionique comprenant au moins une insaturation oléfinique polymérisable, de préférence au moins une insaturation éthylénique polymérisable et notamment une fonction vinylique polymérisable, plus préférentiellement un monomère non ionique choisi parmi les esters d'un acide comprenant au moins une fonction acide monocarboxylique, en particulier un ester d'un acide choisi parmi acide acrylique, acide méthacrylique, et leurs mélanges, par exemple styrène, vinylcaprolactam, acrylate d'alkyle, en particulier acrylate de C₁-C₁₀-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de Ci-Cio-alkyl, préférentiellement méthacrylate de C₁-C₄-alkyl, plus préférentiellement méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate, un composé de formule (I) :
R¹-(L¹)ₘ-(L²)ₙ-R² (I)
dans laquelle :
∘ R¹ représente un groupement acrylate polymérisable ou un groupement méthacrylate polymérisable,
∘ R² représente un groupement OH ou un groupement OCH₃,
∘ L¹ et L², identiques ou différents, représentent indépendamment un groupement éthyloxy ou un groupement propyloxy et
∘ m et n, identiques ou différents et dont au moins un est différent de 0, représentent un nombre inférieur ou égal à 150 et leur somme m+n est inférieure à 150 et
- acide 2-acrylamido-2-méthylpropane sulfonique, un sel d'acide 2-acrylamido-2-méthylpropane sulfonique, l'acide 2-(méthacryloyloxy)éthanesulfonique, un sel d'acide 2-(méthacryloyloxy)éthanesulfonique, méthallyl sulfonate de sodium, styrène sulfonate et leurs mélanges.

8. Méthode selon l'une des revendications 1 à 7 pour laquelle la réaction de polymérisation met en œuvre :
- 100 % en poids de monomère anionique ou
- de 70 % à 99,5 % en poids de monomère anionique et de 0,5 % à 30 % en poids d'au moins un monomère choisi parmi :
- un autre monomère anionique différent choisi parmi acide acrylique, acide méthacrylique, acide itaconique, acide maléique, leurs sels et leurs mélanges,
- un monomère non ionique comprenant au moins une insaturation oléfinique polymérisable, de préférence au moins une insaturation éthylénique polymérisable et notamment une fonction vinylique polymérisable, plus préférentiellement un monomère non ionique choisi parmi les esters d'un acide comprenant au moins une fonction acide monocarboxylique, en particulier un ester d'un acide choisi parmi acide acrylique, acide méthacrylique, et leurs mélanges, par exemple styrène, vinylcaprolactam, acrylate d'alkyle, en particulier acrylate de Ci-Cio-alkyl, préférentiellement acrylate de C₁-C₄-alkyl, plus préférentiellement acrylate de méthyle, acrylate d'éthyle, acrylate de propyle, acrylate d'isobutyle, acrylate de n-butyle, méthacrylate d'alkyle, en particulier méthacrylate de Ci-Cio-alkyl, préférentiellement méthacrylate de C₁-C₄-alkyl, plus préférentiellement méthacrylate de méthyle, méthacrylate d'éthyle, méthacrylate de propyle, méthacrylate d'isobutyle, méthacrylate de n-butyle, acrylate d'aryle, de préférence phénylacrylate, benzylacrylate, phénoxyéthylacrylate, méthacrylate d'aryle, de préférence phénylméthacrylate, benzylméthacrylate, phénoxyéthylméthacrylate, un composé de formule (I) :
R¹-(L¹)ₘ-(L²)ₙ-R² (I)
dans laquelle :
∘ R¹ représente un groupement acrylate polymérisable ou un groupement méthacrylate polymérisable,
∘ R² représente un groupement OH ou un groupement OCH3,
∘ L¹ et L², identiques ou différents, représentent indépendamment un groupement éthyloxy ou un groupement propyloxy et
∘ m et n, identiques ou différents et dont au moins un est différent de 0, représentent un nombre inférieur ou égal à 150 et leur somme m+n est inférieure à 150 et
- acide 2-acrylamido-2-méthylpropane sulfonique, un sel d'acide 2-acrylamido-2-méthylpropane sulfonique, l'acide 2-(méthacryloyloxy)éthanesulfonique, un sel d'acide 2-(méthacryloyloxy)éthanesulfonique, méthallyl sulfonate de sodium, styrène sulfonate et leurs mélanges.

9. Méthode selon l'une des revendications 1 à 8 pour laquelle le composé générateur de radicaux est choisi parmi peroxyde d'hydrogène, persulfate de sodium, persulfate de potassium, persulfate d'ammonium et leurs mélanges ou pour laquelle la réaction de polymérisation met en œuvre, par rapport à la quantité en poids de monomère :
- de 2 % en poids à 8 % en poids, de préférence de 2,5 % en poids à 7 % en poids ou de 2,5 % en poids à 6 % en poids d'hypophosphite de sodium ou
- de 0,01 % en poids à 1,5 % en poids, de préférence de 0,01 % en poids à 1,2 % en poids ou de 0,05 % en poids à 1,5 % en poids, plus préférentiellement de 0,05 % en poids à 1,2 % en poids ou de 0,1 % en poids à 1 % en poids de dipropionate trithiocarbonate disodique (DPTTC) ou
- de 0,1 % en poids à 5 % en poids de composé générateur de radicaux ou, de préférence, de 0,5 % en poids à 4,5 % en poids de peroxyde d'hydrogène ou de 0,1 % en poids à 4 % en poids de persulfate de sodium, de persulfate de potassium ou de persulfate d'ammonium.

10. Méthode de préparation d'une suspension aqueuse de particules de matière minérale comprenant la mise en œuvre de la méthode de broyage selon l'une des revendications 1 à 9, de préférence d'une suspension aqueuse dont l'extrait sec en matière minérale est supérieur à 60 % en poids, de préférence supérieur à 70 % en poids, plus préférentiellement supérieur à 75 % poids ou à 80 % en poids de la suspension.

11. Composition aqueuse comprenant des particules de matière minérale broyée et au moins un polymère définis selon l'une des revendications 1 à 9 et comprenant éventuellement également au moins un adjuvant, en particulier au moins un adjuvant choisi parmi agents dispersants, agents anti-mousse, agents biocides, agents colorants, agents lubrifiants et agents azurants optiques ou au moins un agent liant, notamment un agent liant naturel comme l'amidon ou un agent liant synthétique comme un latex.

12. Méthode de préparation d'une sauce de couchage papetière comprenant le broyage, en présence d'eau, d'au moins une matière minérale en présence d'au moins un polymère obtenu par une réaction de polymérisation radicalaire dans l'eau, à une température supérieure à 50°C, d'au moins un monomère anionique comprenant au moins une insaturation oléfinique polymérisable et une fonction acide carboxylique, en présence :
- d'hypophosphite de sodium,
- de dipropionate trithiocarbonate disodique (DPTTC) et
- d'au moins un composé générateur de radicaux choisi parmi peroxyde d'hydrogène, persulfate d'ammonium, un persulfate de métal alcalin, du peroxyde d'hydrogène associé à un ion choisi parmi Fe^{II}, Fe^{III}, Cu^{I}, Cu^{II} et leurs mélanges.

13. Utilisation comme agent d'aide au broyage d'au moins une matière minérale, d'au moins un polymère obtenu par une réaction de polymérisation radicalaire dans l'eau, à une température supérieure à 50°C, d'au moins un monomère anionique comprenant au moins une insaturation oléfinique polymérisable et une fonction acide carboxylique, en présence :
- d'hypophosphite de sodium,
- de dipropionate trithiocarbonate disodique (DPTTC) et
- d'au moins un composé générateur de radicaux choisi parmi peroxyde d'hydrogène, persulfate d'ammonium, un persulfate de métal alcalin, du peroxyde d'hydrogène associé à un ion choisi parmi Fe^{II}, Fe^{III}, Cu^{I}, Cu^{II} et leurs mélanges.

14. Utilisation selon la revendication 13 pour laquelle le polymère est défini selon l'une des revendications 1 à 9.

15. Méthode de préparation de papier comprenant l'utilisation d'une composition aqueuse selon la revendication 11.

## Patentansprüche

1. Verfahren zur Herstellung von Mineralstoffpartikeln durch Mahlen, in Gegenwart von Wasser, mindestens eines Mineralstoffs in Gegenwart mindestens eines Polymers mit einer gewichtsgemittelten molekularen Masse Mw (gemessen mittels sterischer Ausschlusschromatographie, SEC) von unter 8.000 g/mol und einem Polymolekularitätsindex IP von weniger als 3, wie mit dem in der Patentbeschreibung beschriebenen Verfahren bestimmt wird, das durch eine radikalische Polymerisationsreaktion in Wasser bei einer Temperatur über 50 °C aus mindestens einem anionischen Monomer mit mindestens einer polymerisierbaren olefinischen Mehrfachbindung und einer Carbonsäurefunktion hergestellt wird, in Gegenwart von:
- Natriumhypophosphit,
- Dinatriumdipropionattrithiocarbonat (DPTTC) und
- mindestens einer radikalbildenden Verbindung, ausgewählt aus Wasserstoffperoxid, Ammoniumpersulfat, einem Alkalimetallpersulfat, Wasserstoffperoxid in Verbindung mit einem Ion ausgewählt aus Fe^{II}, Fe^{III}, Cu^{I}, Cu^{II} und deren Mischungen.

2. Verfahren nach Anspruch 1, bei dem:
- die Partikel eine Größe von weniger als 50 µm oder eine Größe von 0,05 µm bis 50 µm oder eine Größe von unter 10 µm, vorzugsweise unter 5 µm oder unter 2 µm, noch mehr bevorzugt unter 1 µm oder unter 0,5 µm aufweisen, oder
- der volumenäquivalente Kugeldurchmesser der Partikel bei einer Größe von 0,05 µm bis 50 µm bzw. weniger als 50 µm, vorzugsweise bei einer Größe von unter 10 µm, noch mehr bevorzugt unter 5 µm oder unter 2 µm, noch weiter bevorzugt unter 1 µm oder unter 0,5 µm, 60 Gew.-% oder 70 Gew.-% oder aber 80 Gew.-% oder 90 Gew.-% beträgt, wobei die Partikelgrößen und die volumenäquivalenten Kugeldurchmesser mit der Messmethode gemäß der Patentbeschreibung ermittelt werden.

3. Verfahren nach einem der Ansprüche 1 und 2, bei dem:
- nur ein einziger Mineralstoff oder zwei oder drei Mineralstoffe eingesetzt werden oder bei dem:
- der Mineralstoff synthetischen oder natürlichen Ursprungs ist, vorzugsweise ausgewählt aus Erdalkalimetallcarbonaten, bevorzugt aus Calciumcarbonat (natürliches Calciumcarbonat oder gefälltes Calciumcarbonat), Strontiumcarbonat, Magnesiumcarbonat, Bariumcarbonat, Dolomit, Kaolin, Titandioxid, Talk, Kalkstein, Calciumsulfat, Bariumsulfat.

4. Verfahren nach einem der Ansprüche 1 bis 3, bei dem die Polymerisationsreaktion in Wasser oder in einem Lösungsmittel im Gemisch mit Wasser, insbesondere einem alkoholischen Lösungsmittel, vor allem Isopropylalkohol, vorzugsweise nur in Wasser erfolgt.

5. Verfahren nach einem beliebigen der Ansprüche 1 bis 4, bei dem das Polymer:
- eine gewichtsgemittelte molekulare Masse M_{W} von unter 7.500 g/mol, vorzugsweise unter 6.500 g/mol, weniger als 6.000 g/mol, noch mehr bevorzugt unter 5.500 g/mol aufweist, oder
- eine gewichtsgemittelte molekulare Masse M_{W} von über 1.000 g/mol oder über 1.200 g/mol oder über 1.500 g/mol aufweist, oder
- einen Polymolekularitätsindex IP von weniger als 2,8 oder einen Polymolekularitätsindex IP von 1,5 bis 3, von 1,5 bis 2,8 oder von 1,5 bis 2,5 aufweist, wie mit dem in der Patentbeschreibung beschriebenen Verfahren bestimmt wird.

6. Verfahren nach einem der Ansprüche 1 bis 5, bei dem das anionische Monomer ausgewählt ist aus Acrylsäure, Methacrylsäure, einem Salz von Acrylsäure, einem Salz von Methacrylsäure und deren Mischungen, vorzugsweise Acrylsäure.

7. Verfahren nach einem der Ansprüche 1 bis 6, bei dem die Polymerisationsreaktion ebenfalls mindestens ein Monomer umsetzt, das ausgewählt ist aus:
- einem weiteren anderen anionischen Monomer, ausgewählt aus Acrylsäure, Methacrylsäure, Itaconsäure, Maleinsäure, deren Salzen und Mischungen,
- einem nicht-ionischen Monomer mit mindestens einer polymerisierbaren olefinischen ungesättigten Mehrfachbindung, vorzugsweise mindestens einer polymerisierbaren ethylenischen ungesättigten Mehrfachbindung und vor allem einer polymerisierbaren funktionellen Vinylgruppe, mehr bevorzugt einem nicht-ionischen Monomer, ausgewählt aus den Estern einer Säure mit mindestens einer Monocarbonsäure-Funktion, insbesondere ein Ester einer Säure, ausgewählt aus Acrylsäure, Methacrylsäure und deren Mischungen, beispielsweise Styrol, Vinylcaprolactam, Alkylacrylat, insbesondere C₁-C₁₀-Alkylacrylat, vorzugsweise C₁-C₄-Alkylacrylat, mehr bevorzugt Methylacrylat, Ethylacrylat, Propylacrylat, Isobutylacrylat, n-Butylacrylat, Alkylmethacrylat, insbesondere C₁-C₁₀-Alkylmethacrylat, vorzugsweise C₁-C₄-Alkylmethacrylat, mehr bevorzugt Methylmethacrylat, Ethylmethacrylat, Propylmethacrylat, Isobutylmethacrylat, n-Butylmethacrylat, Arylacrylat, vorzugsweise Phenylacrylat, Benzylacrylat, Phenoxyethylacrylat, Arylmethacrylat, vorzugsweise Phenylmethacrylat, Benzylmethacrylat, Phenoxyethylmethacrylat, einer Verbindung mit der Formel (I):
R¹-(L¹)ₘ-(L²)ₙ-R² (I),
wobei:
∘ R¹ eine polymerisierbare Acrylatgruppe oder polymerisierbare Methacrylatgruppe darstellt,
∘ R² eine OH-Gruppe oder eine OCH₃-Gruppe darstellt,
∘ L¹ und L², die gleich oder verschieden sein können, unabhängig voneinander eine Ethyloxy-Gruppe oder eine Propyloxy-Gruppe darstellen und
∘ m und n, die gleich oder verschieden sein können und von denen mindestens eine Größe ungleich 0 ist, eine Zahl von kleiner oder gleich 150 darstellen, wobei deren Summe m+n unter 150 liegt, und
- 2-Acrylamido-2-methylpropansulfonsäure, einem Salz von 2-Acrylamido-2-methylpropansulfonsäure, 2-(Methacryloyloxy)ethansulfonsäure, einem Salz von 2-(Methacryloyloxy)ethansulfonsäure, Natriummethallylsulfonat, Styrolsulfonat und deren Mischungen.

8. Verfahren nach einem der Ansprüche 1 bis 7, bei dem die Polymerisationsreaktion Folgendes umsetzt:
- 100 Gew.-% des anionischen Monomers oder
- 70 Gew.-% bis 99,5 Gew.-% des anionischen Monomers und 0,5 Gew.-% bis 30 Gew.-% mindestens eines Monomers ausgewählt aus:
- einem weiteren anderen anionischen Monomer, ausgewählt aus Acrylsäure, Methacrylsäure, Itaconsäure, Maleinsäure, deren Salzen und deren Mischungen,
- einem nicht-ionischen Monomer mit mindestens einer polymerisierbaren olefinischen Mehrfachbindung, vorzugsweise mindestens einer polymerisierbaren ethylenischen Mehrfachbindung und vor allem einer polymerisierbaren funktionellen Vinylgruppe, mehr bevorzugt einem nicht-ionischen Monomer, ausgewählt aus den Estern einer Säure mit mindestens einer Monocarbonsäure-Funktion, insbesondere ein Ester einer Säure, ausgewählt aus Acrylsäure, Methacrylsäure und deren Mischungen, beispielsweise Styrol, Vinylcaprolactam, Alkylacrylat, insbesondere C₁-C₁₀-Alkylacrylat, vorzugsweise C₁-C₄-Alkylacrylat, mehr bevorzugt Methylacrylat, Ethylacrylat, Propylacrylat, Isobutylacrylat, n-Butylacrylat, Alkylmethacrylat, insbesondere C₁-C₁₀-Alkylmethacrylat, vorzugsweise C₁-C₄-Alkylmethacrylat, mehr bevorzugt Methylmethacrylat, Ethylmethacrylat, Propylmethacrylat, Isobutylmethacrylat, n-Butylmethacrylat, Arylacrylat, vorzugsweise Phenylacrylat, Benzylacrylat, Phenoxyethylacrylat, Arylmethacrylat, vorzugsweise Phenylmethacrylat, Benzylmethacrylat, Phenoxyethylmethacrylat, einer Verbindung mit der Formel (I):
R¹-(L¹)ₘ-(L²)ₙ-R² (I),
wobei:
∘ R¹ eine polymerisierbare Acrylatgruppe oder polymerisierbare Methacrylatgruppe darstellt,
∘ R² eine OH-Gruppe oder eine OCH₃-Gruppe darstellt,
∘ L¹ und L², die gleich oder verschieden sein können, unabhängig voneinander eine Ethyloxy-Gruppe oder eine Propyloxy-Gruppe darstellen und
∘ m und n, die gleich oder verschieden sein können und von denen mindestens eine Größe ungleich 0 ist, eine Zahl von kleiner oder gleich 150 darstellen, wobei deren Summe m+n unter 150 liegt, und
- 2-Acrylamido-2-methylpropansulfonsäure, einem Salz von 2-Acrylamido-2-methylpropansulfonsäure, 2-(Methacryloyloxy)ethansulfonsäure, einem Salz von 2-(Methacryloyloxy)ethansulfonsäure, Natriummethallylsulfonat, Styrolsulfonat und deren Mischungen.

9. Verfahren nach einem der Ansprüche 1 bis 8, bei dem die radikalbildende Verbindung ausgewählt ist aus Wasserstoffperoxid, Natriumpersulfat, Kaliumpersulfat, Ammoniumpersulfat und deren Mischungen oder bei dem die Polymerisationsreaktion, bezogen auf den Gewichtsanteil an Monomeren, Folgendes umsetzt:
- 2 Gew.-% bis 8 Gew.-%, vorzugsweise 2,5 Gew.-% bis 7 Gew.-% oder 2,5 Gew.-% bis 6 Gew.-% Natriumhypophosphit, oder
- 0,01 Gew.-% bis 1,5 Gew.-%, vorzugsweise 0,01 Gew.-% bis 1,2 Gew.-% oder 0,05 Gew.-% bis 1,5 Gew.-%, mehr bevorzugt 0,05 Gew.-% bis 1,2 Gew.-% oder 0,1 Gew.-% bis 1 Gew.-% Dinatriumdipropionattrithiocarbonat (DPTTC), oder
- 0,1 Gew.-% bis 5 Gew.-% radikalbildende Verbindung oder, vorzugsweise, 0,5 Gew.-% bis 4,5 Gew.-% Wasserstoffperoxid oder 0,1 Gew.-% bis 4 Gew.-% Natriumpersulfat, Kaliumpersulfat oder Ammoniumpersulfat.

10. Verfahren zur Herstellung einer wässrigen Suspension von Mineralstoffpartikeln mit Umsetzung des Mahlverfahrens nach einem der Ansprüche 1 bis 9, vorzugsweise einer wässrigen Suspension mit einem Trockenextrakt an Mineralstoff von über 60 Gew.-%, vorzugsweise über 70 Gew.-%, mehr bevorzugt über 75 Gew.-% oder 80 Gew.-% der Suspension.

11. Wässrige Zusammensetzung mit gemahlenen Mineralstoffpartikeln und mindestens einem Polymer nach einem der Ansprüche 1 bis 9, die eventuell auch mindestens einen Hilfsstoff, insbesondere mindestens einen Hilfsstoff ausgewählt aus Dispersionsmitteln, Antischaummitteln, bioziden Mitteln, Färbemitteln, Schmiermitteln und optischen Aufhellungsmitteln, oder mindestens ein Bindemittel, insbesondere ein natürliches Bindemittel wie Stärke oder ein synthetisches Bindemittel wie einen Latex enthält.

12. Verfahren zur Herstellung einer Streichmasse für die Papierindustrie durch Mahlen, in Gegenwart von Wasser, mindestens eines Mineralstoffs in Gegenwart mindestens eines Polymers, das durch eine radikalische Polymerisationsreaktion in Wasser bei einer Temperatur über 50 °C aus mindestens einem anionischen Monomer mit mindestens einer polymerisierbaren olefinischen Mehrfachbindung und einer Carbonsäurefunktion hergestellt wird, in Gegenwart von:
- Natriumhypophosphit,
- Dinatriumdipropionattrithiocarbonat (DPTTC) und
- mindestens einer radikalbildenden Verbindung, ausgewählt aus Wasserstoffperoxid, Ammoniumpersulfat, einem Alkalimetallpersulfat, Wasserstoffperoxid in Verbindung mit einem Ion ausgewählt aus Fe^{II}, Fe^{III}, Cu^{I}, Cu^{II} und deren Mischungen.

13. Verwendung als Hilfsmittel für das Mahlen mindestens eines Mineralstoffs, mindestens eines Polymers, das durch eine radikalische Polymerisationsreaktion in Wasser bei einer Temperatur über 50 °C aus mindestens einem anionischen Monomer mit mindestens einer polymerisierbaren olefinischen Mehrfachbindung und einer Carbonsäurefunktion hergestellt wird, in Gegenwart von:
- Natriumhypophosphit,
- Dinatriumdipropionattrithiocarbonat (DPTTC) und
- mindestens einer radikalbildenden Verbindung, ausgewählt aus Wasserstoffperoxid, Ammoniumpersulfat, Alkalimetallpersulfat, Wasserstoffperoxid in Verbindung mit einem Ion ausgewählt aus Fe^{II}, Fe^{III}, Cu^{I}, Cu^{II} und deren Mischungen.

14. Verwendung nach Anspruch 13, bei der das Polymer nach einem der Ansprüche 1 bis 9 definiert ist.

15. Verfahren zur Papierherstellung unter Verwendung einer wässrigen Zusammensetzung nach Anspruch 11.

## Claims

1. A method for preparing particles of mineral matter comprising grinding of at least one mineral matter in water in the presence of at least one polymer with a molecular mass by weight M_{W} (measured by SEC) of less than 8,000 g/mol and a polymolecularity index (PI) of less than 3, as determined by the method described in the description, obtained by a radical polymerisation reaction in water, at a temperature higher than 50°C, of at least one anionic monomer comprising at least one polymerisable olefinic unsaturation and a carboxylic acid group, in the presence:
- of sodium hypophosphite,
- of disodium 2,2'-(thiocarbonylbisthio)dipropanoate (DPTTC) and
- of at least one radical-generating compound chosen among hydrogen peroxide, ammonium persulphate, an alcalin metal persulphate, hydrogen peroxide associated with an ion chosen among Fe^{II}, Fe^{III}, Cu^{I}, Cu^{II} and mixtures thereof.

2. The method according to claim 1 for which:
- the particles have a size of less than 50 µm or a size ranging from 0.05 µm to 50 µm or a size of less than 10 µm, preferably less than 5 µm or 2 µm, more preferably less than 1 µm or less than 0.5 µm or
- the equivalent spherical diameter of the particles for a size ranging from 0.05 µm to 50 µm or less than 50 µm, preferably for a size of less than 10 µm, more preferably less than 5 µm or 2 µm, even more preferably less than 1 µm or less than 0.5 µm, is equal to 60% by weight or equal to 70% by weight or even equal to 80% by weight or even equal to 90% by weight,
in which the particle sizes and the equivalent spherical diameters are determined by the method of measurement as defined in the description.

3. The method according to one of claims 1 and 2 for which:
- only one mineral matter or two or three mineral matters are used or for which:
- the mineral matter is synthetic or of natural origin, preferably chosen among the alkaline earth metal carbonates, preferably calcium carbonate (natural calcium carbonate or precipitated calcium carbonate), strontium carbonate, magnesium carbonate, barium carbonate, dolomite, kaolin, titanium dioxide, talc, lime, calcium sulphate, barium sulphate.

4. The method according to one of claims 1 to 3 for which the polymerisation reaction is carried out in water or in a solvent mixed with water, especially an alcoholic solvent, in particular isopropyl alcohol, preferably in water only.

5. The method according to one of claims 1 to 4 for which the polymer:
- has a weight-average molecular mass M_{W} of less than 7,500 g/mol, preferably less than 6,500 g/mol, less than 6,000 g/mol, more preferably less than 5,500 g/mol or
- has a weight-average molecular mass M_{W} greater than 1,000 g/mol or greater than 1,200 g/mol or greater than 1,500 g/mol or
- has a polymolecularity index (PI) of less than 2.8 or a polymolecularity index (PI) ranging from 1.5 to 3, from 1.5 to 2.8, or ranging from 1.5 to 2.5, as determined by the method described in the description.

6. The method according to one of claims 1 to 5 for which the anionic monomer is chosen among acrylic acid, methacrylic acid, an acrylic acid salt, a methacrylic acid salt and mixtures thereof, preferably acrylic acid.

7. The method according to one of claims 1 to 6 for which the polymerisation reaction also uses at least one monomer chosen among:
- another different anionic monomer chosen among acrylic acid, methacrylic acid, itaconic acid, maleic acid, their salts and mixtures thereof,
- a non-ionic monomer comprising at least one polymerisable olefinic unsaturation, preferably at least one polymerisable ethylenic unsaturation and notably a polymerisable vinyl group, more preferably a non-ionic monomer chosen among the esters of an acid comprising at least one monocarboxylic acid group, in particular an ester of an acid chosen among acrylic acid, methacrylic acid and mixtures thereof, for example styrene, vinylcaprolactam, alkyl acrylate, in particular C₁-C₁₀-alkyl acrylate, preferably C₁-C₄-alkyl acrylate, more preferably methyl acrylate, ethyl acrylate, propyl acrylate, isobutyl acrylate, n-butyl acrylate, alkyl methacrylate, in particular C₁-C₁₀-alkyl methacrylate, preferably C₁-C₄-alkyl methacrylate, more preferably methyl methacrylate, ethyl methacrylate, propyl methacrylate, isobutyl methacrylate, n-butyl methacrylate, aryl acrylate, preferably phenyl acrylate, benzyl acrylate, phenoxyethyl acrylate, aryl methacrylate, preferably phenyl methacrylate, benzyl methacrylate, phenoxyethyl methacrylate, a compound of formula (I):
R¹-(L¹)ₘ-(L²)ₙ-R² (I)
wherein:
∘ R¹ represents a polymerisable acrylate group or a polymerisable methacrylate group,
∘ R² represents an OH group or an OCH3 group,
∘ L¹ and L², identical or different, independently represent an ethyloxy group or a propyloxy group and
∘ m and n, identical or different and of which at least one is different to 0, represent a number less than or equal to 150 and their sum m+n is less than 150 and
- 2-acrylamido-2-methylpropanesulfonic acid, a salt of 2-acrylamido-2-methylpropanesulfonic acid, 2-(methacryloyloxy)ethanesulfonic acid, a salt of 2-(methacryloyloxy)ethanesulfonic acid, sodium methallyl sulfonate, styrene sulfonate and mixtures thereof.

8. The method according to one of claims 1 to 7 for which the polymerisation reaction uses:
- 100% by weight of anionic monomer or
- from 70% to 99.5% by weight of anionic monomer and from 0.5% to 30% by weight of at least one monomer chosen among:
- another different anionic monomer chosen among acrylic acid, methacrylic acid, itaconic acid, maleic acid, their salts and mixtures thereof.
- a non-ionic monomer comprising at least one polymerisable olefinic unsaturation, preferably at least one polymerisable ethylenic unsaturation and notably a polymerisable vinyl group, more preferably a non-ionic monomer chosen among the esters of an acid comprising at least one monocarboxylic acid group, in particular an ester of an acid chosen among acrylic acid, methacrylic acid and mixtures thereof, for example styrene, vinylcaprolactam, alkyl acrylate, in particular C₁-C₁₀-alkyl acrylate, preferably C₁-C₄-alkyl acrylate, more preferably methyl acrylate, ethyl acrylate, propyl acrylate, isobutyl acrylate, n-butyl acrylate, alkyl methacrylate, in particular C₁-C₁₀-alkyl methacrylate, preferably C₁-C₄-alkyl methacrylate, more preferably methyl methacrylate, ethyl methacrylate, propyl methacrylate, isobutyl methacrylate, n-butyl methacrylate, aryl acrylate, preferably phenyl acrylate, benzyl acrylate, phenoxyethyl acrylate, aryl methacrylate, preferably phenyl methacrylate, benzyl methacrylate, phenoxyethyl methacrylate, a compound of formula (I):
R¹-(L¹)ₘ-(L²)ₙ-R² (I)
wherein:
∘ R¹ represents a polymerisable acrylate group or a polymerisable methacrylate group,
∘ R² represents an OH group or an OCH3 group,
∘ L¹ and L², identical or different, independently represent an ethyloxy group or a propyloxy group and
∘ m and n, identical or different and of which at least one is different to 0, represent a number less than or equal to 150 and their sum m+n is less than 150 and
- 2-acrylamido-2-methylpropanesulfonic acid, a salt of 2-acrylamido-2-methylpropanesulfonic acid, 2-(methacryloyloxy)ethanesulfonic acid, a salt of 2-(methacryloyloxy)ethanesulfonic acid, sodium methallyl sulfonate, styrene sulfonate and mixtures thereof.

9. The mehod according to one of claims 1 to 8 for which the radical-generating compound is chosen among hydrogen peroxide, sodium persulphate, potassium persulphate, ammonium persulphate and mixtures thereof or for which the polymerisation reaction uses, in relation to the amount by weight of monomer:
- from 2% by weight to 8% by weight, preferably from 2.5% by weight to 7% by weight or from 2.5% by weight to 6% by weight, of sodium hypophosphite or
- from 0.01% by weight to 1.5% by weight, preferably from 0.01% by weight to 1.2% by weight or from 0.05% by weight to 1.5% by weight, more preferably from 0.05% by weight to 1.2% by weight or from 0.1% by weight to 1% by weight, of disodium 2,2'-(thiocarbonylbisthio)dipropanoate (DPTTC) or
- from 0.1% by weight to 5% by weight of radical-generating compound or, preferably, from 0.5% by weight to 4.5% by weight of hydrogen peroxide or from 0.1% by weight to 4% by weight of sodium persulphate, of potassium persulphate or of ammonium persulphate.

10. A method for preparing an aqueous suspension of particles of mineral matter comprising the use of the grinding method according to one of claims 1 to 9, preferably an aqueous suspension with a solid content in mineral matter greater than 60% by weight, preferably greater than 70% by weight, more preferably greater than 75% by weight or greater than 80% by weight of the suspension.

11. An aqueous composition comprising particles of ground mineral matter and at least one polymer defined according to one of claims 1 to 9 and optionally also comprising at least one admixture, in particular at least one admixture chosen among dispersing agents, anti-foaming agents, biocides, colouring agents, lubricant agents and optical brightening agents or at least one bonding agent, in particular a natural bonding agent such as starch or a synthetic bonding agent such as a latex.

12. A method for preparing a paper coating colour comprising grinding of at least one mineral matter in water in the presence of at least one polymer obtained by a radical polymerisation reaction in water, at a temperature greater than 50°C, of at least one anionic monomer comprising at least one polymerisable olefinic unsaturation and a carboxylic acid group, in the presence:
- of sodium hypophosphite,
- of disodium 2,2'-(thiocarbonylbisthio)dipropanoate (DPTTC) and
- of at least one radical-generating compound chosen among hydrogen peroxide, ammonium persulphate, an alcalin metal persulphate, hydrogen peroxide associated with an ion chosen among Fe^{II}, Fe^{III}, Cu^{I}, Cu^{II} and mixtures thereof.

13. A use as a grinding aid agent of at least one mineral matter, of at least one polymer obtained by a radical polymerisation reaction in water, at a temperature greater than 50°C, of at least one anionic monomer comprising at least one polymerisable olefinic unsaturation and a carboxylic acid group, in the presence:
- of sodium hypophosphite,
- of disodium 2,2'-(thiocarbonylbisthio)dipropanoate (DPTTC) and
- of at least one radical-generating compound chosen among hydrogen peroxide, ammonium persulphate, an alcalin metal persulphate, hydrogen peroxide associated with an ion chosen among Fe^{II}, Fe^{III}, Cu^{I}, Cu^{II} and mixtures thereof.

14. The use according to claim 13 for which the polymer is defined according to one of claims 1 to 9.

15. A method for preparing paper comprising the use of an aqueous composition according to claim 11.
